# EUROPEAN PATENT APPLICATION

(11) **EP 1 029 441 A2**
(43) Date of publication of application: **23.08.2000**
(21) Application number: 00200031.3
(22) Date of filing: 24.01.2000
(51) Int. Cl.: A01F 15/10, A01F 15/07, A01F 15/14, A01D 90/06

(54) **Baling machine for pruning residues**

(30) Priority: 17.02.1999 IT RE990022
(71) Applicant: Tigieffe - S.R.L., 42045 Luzzara ( Regio Emilia) (IT)
(72) Inventor: Ferramola, Virginio, 42045 Luzzara, Regio Emilia (IT)
(74) Representative: Corradini, Corrado

(57) **Abstract**

A baling machine for pruning residues, comprising a frame (1) mounted on wheels (3) and provided with a drawbar (4) for connection to a tractor, and on which there are provided a unit (12) for gathering pruning residues from the ground, a rearward compacting chamber, and a bale binding unit, said gathering unit comprising at least one transverse lower pronged rotor (17, 18) rotated in the opposite direction to the machine advancement direction (A), and at least one transverse upper pronged rotor (19, 20) rotated in the opposite direction to the preceding and having its prongs offset from those of the lower rotor, between said two rotors there being defined the channel for feeding the pruning residues to the compacting chamber.

## Description

This invention relates to a baling machine for pruning residues, a typical but not exclusive use of which is in gathering cut-off vine branches.

During pruning, and in particular during vine pruning, the cut-off branches are left on the ground, to be gathered on termination of pruning.

This gathering is still done totally by hand, involving lengthy and tiring operations.

Said pruning residues are usually heaped together on a suitable site and then burned, it being uneconomical to form them into faggots because of the lengthy time and effort required.

In this sector there is consequently a much felt need for means able to automate this gathering of pruned branches.

The main object of this invention is therefore to provide a machine able to gather such pruning residues from the ground and to form them into bales usable for heating and other purposes, all within the context of a rational, reliable and robust construction of small overall size.

This object is attained by a machine having the characteristics defined in the claims.

In particular, it comprises a towed frame provided at its front with a gathering unit able to swivel in a longitudinal vertical plane in order to occupy a raised rest position for machine transfer along the road, and a lowered working position in which it lies a short distance from the ground, from which it gathers the branches to serve them to a rearward chamber for their compacting and binding.

Said gathering unit comprises a lower pair of transverse pronged rotors rotating in the opposite direction to the direction of travel, and with which there cooperate an overlying pair of transverse pronged rotors rotated in the opposite direction to the preceding, between said pairs of rotors there being defined a downstream-tapering conveying channel opening into said compacting chamber.

This latter is of cylindrical shape with its horizontal longitudinal axis positioned transverse to the travel direction, and comprises a fixed front part, and a movable rear part acting as a discharge door for the compacted and bound material.

Specifically, said cylindrical chamber is defined by a circumferential series of transverse ribbed rollers rotating in the same direction and interrupted at the communication with said chamber.

With said chamber there are associated means for measuring the pressure attained within it, a unit for binding the compacted mass or bale of branches, a unit for cutting the bale binding means, and a unit for opening and closing said discharge door.

All the movements involved in gathering the pruning residues and forming them into a bale are linked together and derive from the power take-off of a tractor via a single cardan shaft, the swivel movements of said gathering unit and said discharge door being controlled by hydraulic units connected to the tractor pump by way of a suitable control distributor.

In a further advantageous embodiment, said movements derive from a hydraulic motor fed by the hydraulic pump usually present on the tractor.

All the objects of the invention are attained by virtue of the aforedefined means, by which the pruning residues are gathered automatically, and hence quickly, directly from the ground to be advantageously made available in bales, enabling them to be used either as fuel or, after suitable crushing, as a component for fertilizer, animal feed or wood composite.

The constructional characteristics and merits of the invention, together with its operation, will be apparent from the detailed description given hereinafter with reference to the figures of the accompanying drawings, which illustrate a preferred embodiment thereof by way of non-limiting example.
Figure 1 is a side view of the invention in its rest configuration.
Figure 2 is a view taken in the direction II of Figure 1.
Figure 3 is a view taken substantially on the plane III-III of Figure 1.
Figure 4 is a view taken substantially on the plane IV-IV of Figure 1.
Figure 5 is a view taken in the direction V of Figure 1.
Figure 6 is a side elevation showing part of the linkage of the invention.
Figure 7 is an opposite side view of the invention showing the remaining part of said linkage.
Figure 8 is a partial plan view from above showing the binding unit of the invention.
Figure 9 is a view taken in the direction IX of Figure 8.
Figure 10 is a partial side view taken in the direction X of Figure 9.

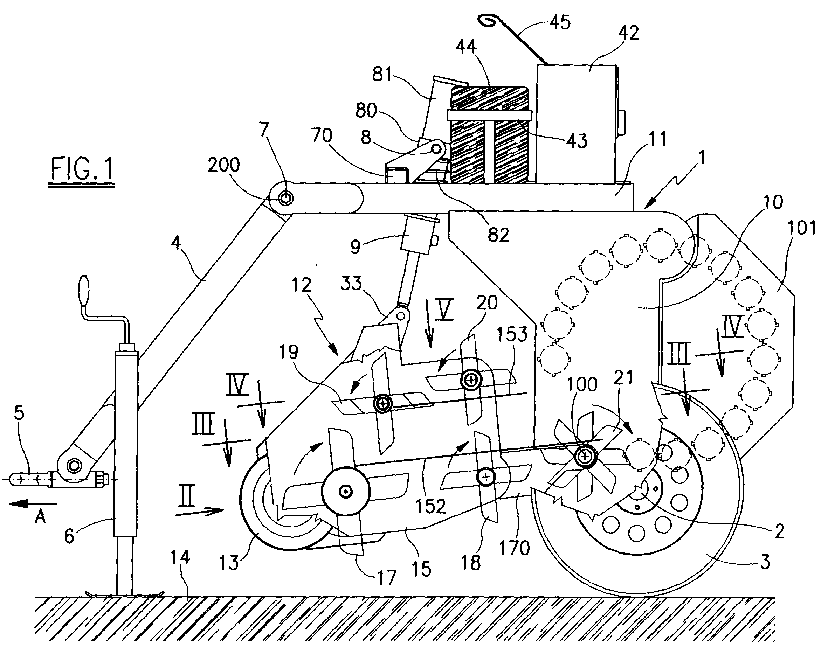

Said figures, and in particular Figures 1, 2 and 9, show a frame 1 shaped as a portal, the arms (sides) 10 of which are connected lowerly together by an axle 2 provided with wheels 3, and the cross-member 11 of which extends frontwards where it carries, hinged to it, an articulated drawbar 4 provided with an eyelet for coupling to a tractor. The drawbar 4 can be adjusted in height by locking the hinge 200 in a suitable position.

Said tractor (not shown) is provided with a usual power take-off and a likewise usual hydraulic pump, for the requirements stated hereinafter.

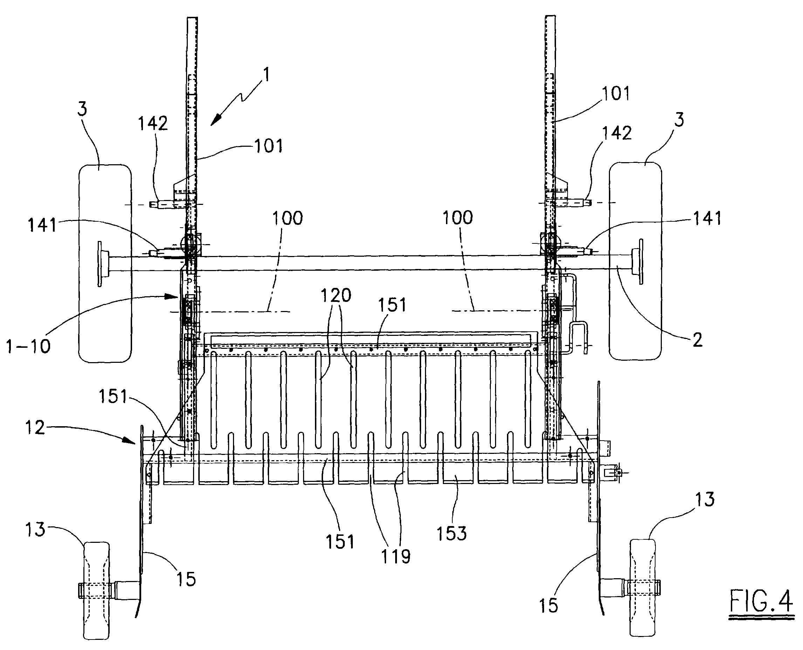

As can be seen from Figure 4, said drawbar 4 is provided with a telescopic resting foot 6 for parking the machine when not in use.

To the rear of the drawbar hinge pin 7, the frame 1 comprises a cross-member 70 to which there is hinged, on the transverse pin 8, a ring 80 slidingly mounted on the body of a hydraulic cylinder-piston unit 9, the rod of which is pivoted to a holed lug 33 projecting upwards from the underlying gathering unit indicated by 12.

Said ring 80 rests below the edge of an overlying skirt 81 fixed to the top of the cylinder-piston unit 9, an underlying spring 82 being provided to allow the cylinder-piston unit 9 to slide upwards relative to said ring 80 when the independent idle front wheels of said gathering unit 12 encounter roughness on the ground 14.

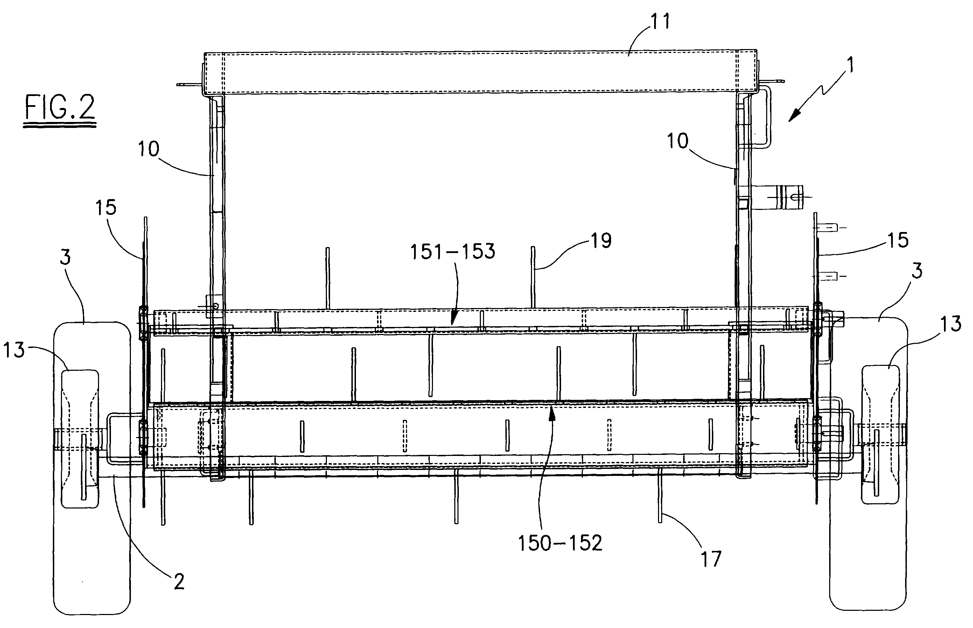

As can be seen in Figures 2, 3, 4 and 5, the unit 12 comprises two vertically-lying opposing side plates 15 which support said wheels 13, and are connected together by two overlying frame-shaped flat structures, the lower of which is indicated by 150 (Figures 2, 3 and 5) and the upper by 151 (Figures 2, 4 and 5).

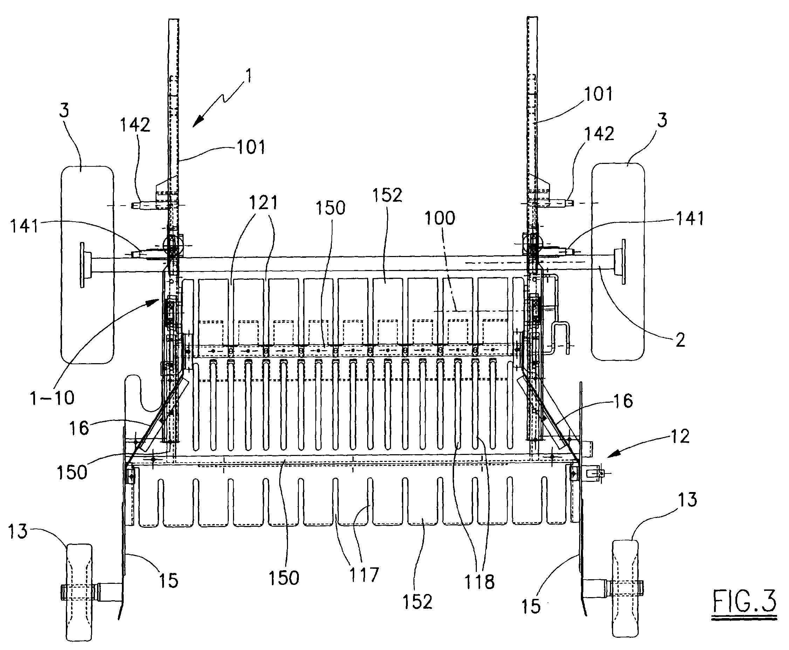

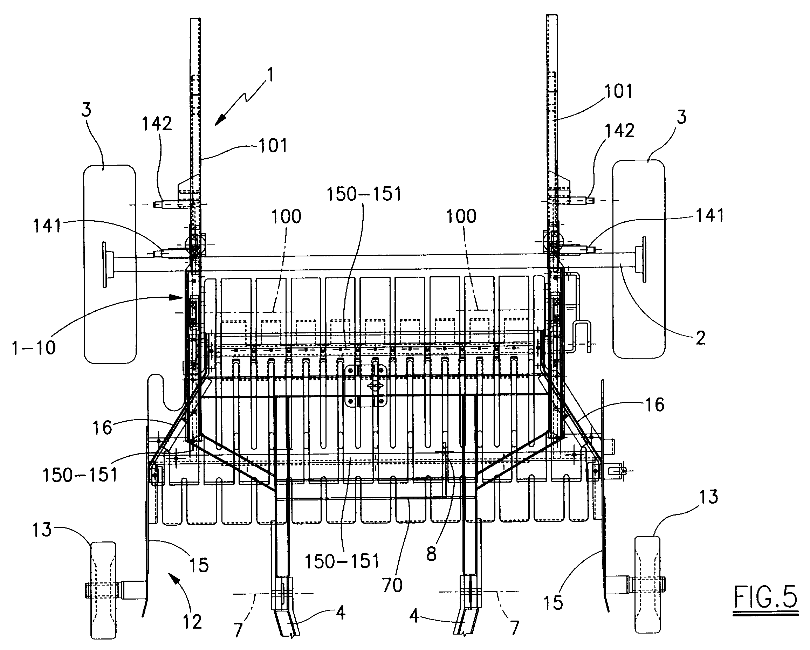

Each of the two plates 15 is individually connected to a rearward vertical containing plate 16 inclined towards the machine centre and towards the respective side 10 of the frame 1 (see Figures 3 and 5), and lowerly provided (see Figure 1) with a projecting arm 170, which is hinged on the lower transverse axis 100 of the frame 1.

Above the lower structure 150 and below the upper structure 151 there are fixed two panels 152 and 153 respectively, which cooperate with said plates 15 and 16 to provide a guide and slide channel for the pruning residues which are gathered from the ground 14 and urged along said channel by the means described hereinafter.

These comprise two lower pronged rotors 17 and 18 which rotate (see Figure 1) in the opposite direction to the machine advancement direction A, and two upper pronged rotors 19 and 20 which rotate in the opposite direction to the preceding.

All the rotors consist of a shaft provided with a plurality of flat prongs or teeth suitably spaced apart longitudinally and radially, said prongs being suitably offset.

The first rotor 18, which is the actual gathering rotor, has a greater diameter than the others.

Said panels 152 and 153 are provided with corresponding passage slots for said prongs, the slots being indicated by 117, 118, 119 and 120 for the rotors 17, 18, 19 and 20 respectively.

The lower panel 152 has a further series of slots 121 for passage of the flat prongs of a further rotor 21 positioned at the loading mouth of a compacting chamber for the pruning residues.

The axis 100 about which the gathering unit 12 swivels coincides with the axis of rotation of said further rotor 21.

Said compacting chamber is of cylindrical shape with its horizontal axis positioned transverse to the machine longitudinal axis and is formed partly by the sides 10 of the frame 1 and partly by a swivel shell 101 acting as the discharge door for the bales (not shown).

These latter are formed by a circumferential series of rollers comprising angularly equidistant longitudinal ribs and arranged in the form of a cylindrical surface interrupted at the rotor 21 to form the chamber loading mouth.

Those rollers associated with the sides 10 of the frame 1 are indicated by 22 and those associated with the door 101 are indicated by 23, the upper roller indicated by 24 being common to said two parts of the compacting chamber and having its shaft acting as the hinge shaft for the door 101.

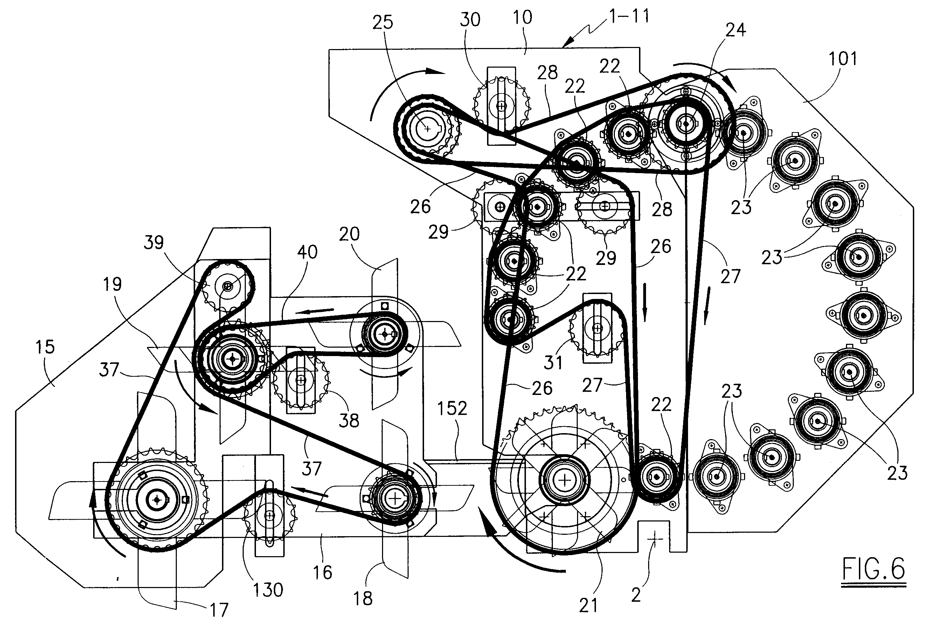

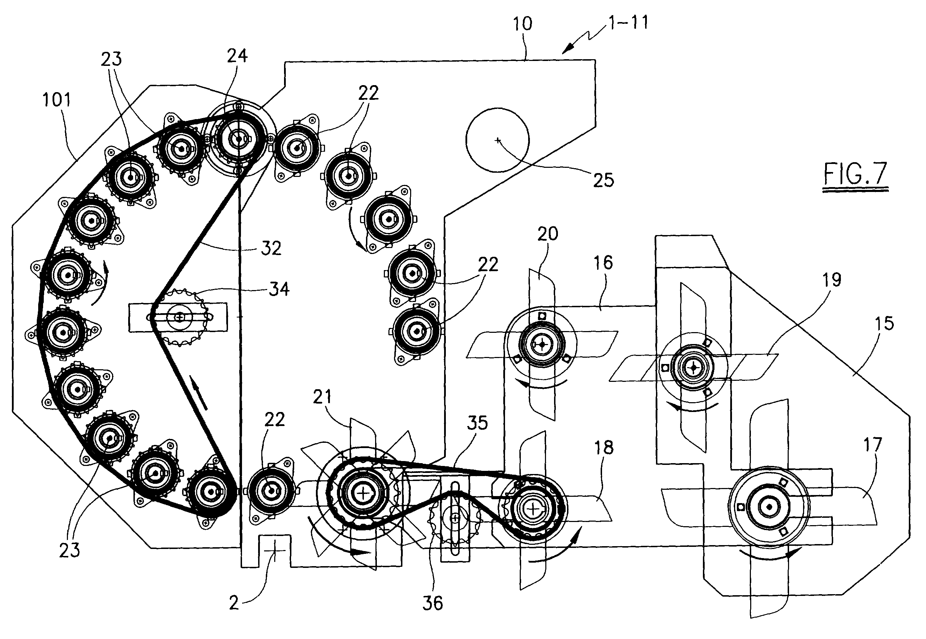

Although not shown, it should be noted that on one side of the machine there is provided a cardan shaft, the input end of which is connected to the tractor power take-off and its output end is connected to the shaft which in Figures 6 and 7 is indicated by 25, and provided with suitable safety systems to prevent abnormal forces causing damage to and breakage of the linkage, described hereinafter.

Alternatively, the shaft 25 can be connected to a hydraulic motor fed by the tractor hydraulic pump via suitable valves.

On one end of said shaft 25, which is driven to rotate in the direction shown in Figure 6, there are keyed two drive sprockets of different diameter which drive the chains 26 and 28 in the directions indicated by the arrows.

Specifically, the chain 26 extends endlessly about the smaller-diameter drive sprocket of said shaft 25 and a sprocket keyed onto the shaft of the rotor 21, and is deviated about two chain tensioners indicated by 29.

The chain 28 extends endlessly about the larger-diameter drive sprocket of the shaft 25 and a sprocket keyed onto the swivel shaft 24 of the door 101, and is deviated about the chain tensioner indicated by 30.

On said shaft 24 there is keyed a second drive sprocket of diameter less than the preceding, provided for driving a chain 27 extending endlessly about the sprockets keyed onto the rotation shafts of those ribbed rollers 22 associated with the fixed part of the compacting chamber, and deviated about the chain tensioner indicated by 31.

The rollers 23 associated with the door 101 of the compacting chamber are driven by the drive chain shown in Figure 7 and indicated by the reference numeral 32.

This extends endlessly about a drive sprocket keyed onto the opposite end of the shaft 24 and the sprockets keyed onto the rotation shafts of the ribbed rollers 23, and is deviated about a chain tensioner indicated by 34.

In Figure 7 it can be seen that on the opposite end of the rotor 21 there is keyed a drive sprocket for a chain 35 which extends endlessly about said drive sprocket and a sprocket keyed onto the rotation shaft of the rotor 18, and is deviated about the chain tensioner indicated by 36.

As can be seen in Figure 6, on the opposite end of the shaft of said rotor 18 there is keyed a drive sprocket for driving the chain indicated by 37.

This latter extends endlessly about said drive sprocket, a driven sprocket keyed onto the rotation shaft of the rotor 17, and an idle sprocket 39 supported by the plate 15, and is deviated about a sprocket keyed onto the rotation shaft of the rotor 19 and about a chain tensioner indicated by 130.

On the shaft of the rotor 19 there is also keyed a further drive sprocket of diameter less than the preceding. A chain 40 extends endlessly about this drive sprocket and about a sprocket keyed onto the rotation shaft of the rotor 20, and is deviated about the chain tensioner 38.

It should be noted that the aforedescribed chain linkage is contained in a suitable safety and protection casing, not shown for reasons of simplicity and clarity.

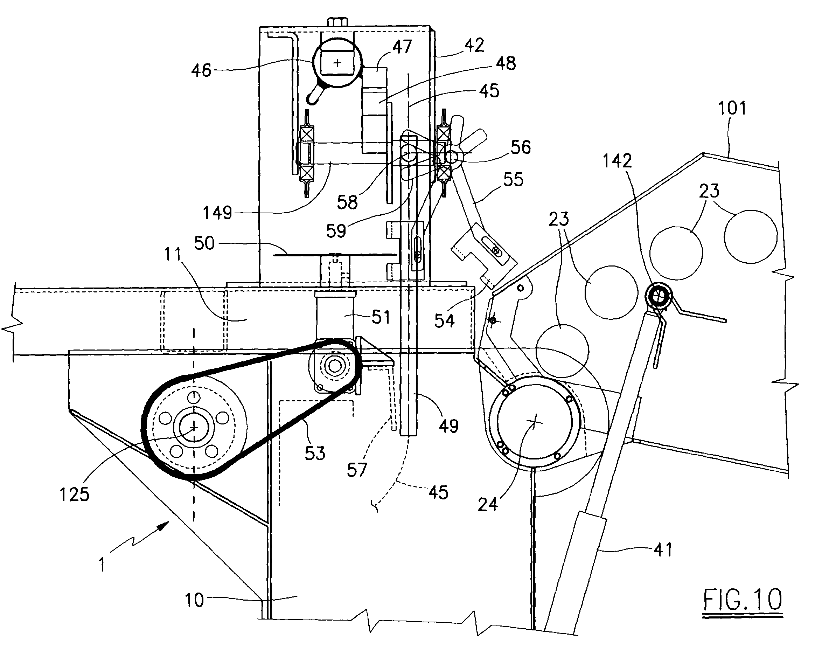

With reference to Figure 10 it can be seen that the compacting chamber discharge door 101 is opened by two opposite hydraulic cylinder-piston units 41 hinged lowerly on respective pins 141 (see Figures 3 to 5) fixed to the sides 10 of the frame 1 and hinged upperly on pins 142 rigid with said door 101.

Said cylinder-piston units 41 are controlled by an electrical or lever-operated hydraulic distributor positioned on the tractor dashboard.

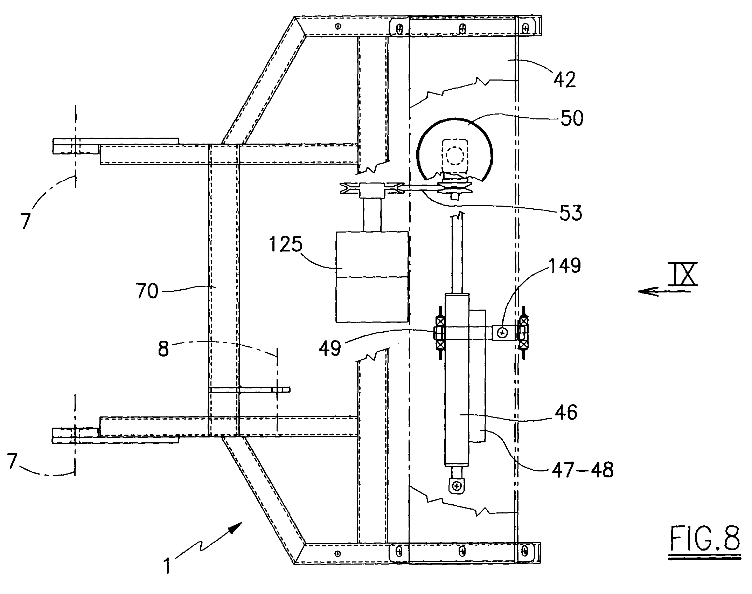

Before said door 101 is opened, the bale of branches is bound by the means described hereinafter with reference to Figures 8 to 10.

Said means are contained in a cowling 42 positioned on the cross-member 11 of the frame 1, behind a holder 43 containing reels 44 of thread 45 in the form of a cord of natural or synthetic material (see Figure 1).

With reference to Figures 8 to 10, these means comprise a through-rod horizontal hydraulic cylinder-piston unit 46 connected to the hydraulic distributor located on the tractor dashboard and extending transverse to the machine travel direction A.

The through rod of the cylinder-piston unit 46 is fixed to the roof of the cowling 42, the body of the unit 46 being provided with a rack bar 47 which engages an underlying toothed sector 48.

Said sector 48 is fixed to a longitudinal spindle 149 rotatably mounted on said cowling 42 and rigidly carrying a guide tube 49, known as a needle, through which the thread 45 passes freely.

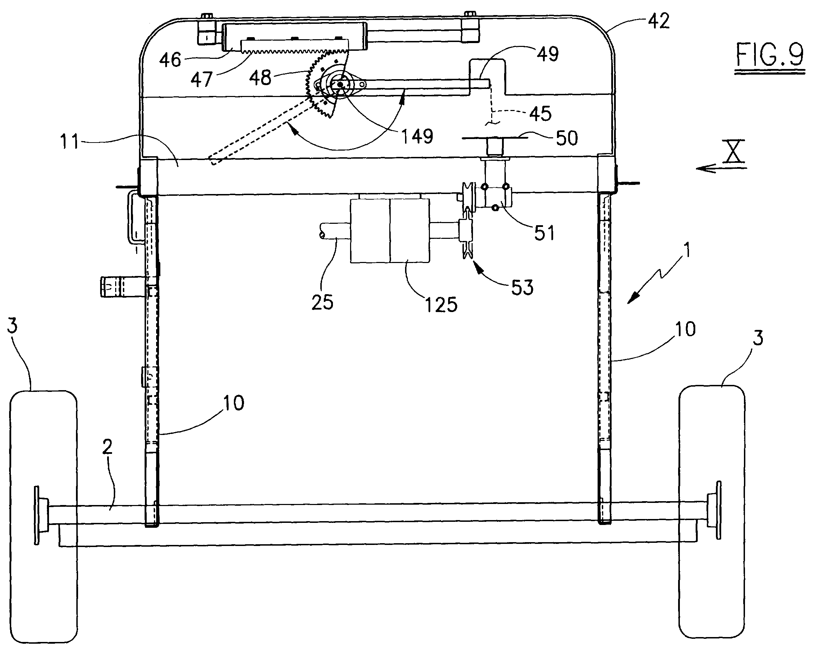

During bale formation, said thread guide tube 49 occupies the horizontal position shown by full lines in Figure 9, with a length of thread 45 hanging freely from the free end of it.

With the tube 49 there is associated a cutting unit comprising a disc blade 50 of vertical axis, positioned immediately above the cross-member 11 of the frame 1 and below the free end of the tube 49 when this is stationary in its horizontal position as stated.

Said blade 50 is keyed onto the output shaft of a right angled transmission system 51, the input shaft of which is driven by a belt 53 deriving its movement from a step-down gear 125 driven by the shaft 25 (Figures 6, 9).

With said blade 50 there is also associated a member for retaining the thread 45 during cutting, this member comprising a block 54 (see Figure 10) which in that side facing said blade 50 comprises a cross-shaped recess.

The vertical groove of said cross-shaped recess, which is less deep than the horizontal groove, is arranged to receive and retain the thread 45 at the moment of cutting, whereas the horizontal groove receives the facing part of the blade 50.

The block 54 is fixed to a projecting appendix 55 hinged, on the transverse horizontal axis indicated by 56 in Figure 10, to the rear wall of the cowling 42.

The block 54 is able to occupy an inactive position (to the right in Figure 10) in which it enables the thread to run freely downwards and follow the swing movements of the tube 49, and an active position (to the left in the figure) in which it operates as stated, with the tube 49 at that moment stationary.

Said active and inactive positions of the block 54 are determined by a fork 59 which is fixed to said appendix 55, and between the arms of which there is inserted, with clearance, a peg 58 fixed to the spindle 149 in a position perpendicular to the thread guide tube 49.

Because of said clearance, the fork 59 is virtually insensitive to the usual oscillation to which the peg 58 is subjected during bale formation, whereas the said fork 59 undergoes a large swing when the tube 49 becomes positioned horizontally on termination of binding, with the block 54 facing the blade 50.

Finally, although not shown it should be noted that the invention also comprises a pressure gauge associated with the compacting chamber, preferably of adjustable type, and at least one warning device able to warn the operator when the bale has attained the chosen compactness.

Said warning device can be an acoustic or visual device, both being preferably provided.

The invention operates in the following manner.

At the commencement of operations the compacting chamber is closed, a length of thread 45 hangs from the tube 49 which is stationary in the horizontal position shown in Figure 9, the front wheels 13 rest on the ground 14, and the ribbed rollers 22 and 23 rotate as shown, as do the rotors 17-21, with the teeth or prongs of the front lower rotor 17 grazing said ground 14 from which they gather the pruning residues.

Before reaching the operating chamber said residues assume the form of a layer by the combined action of the rotors 17-20 and the narrow passage provided by the containing plates 16, and are then served to the entry rotor 21 which in combination with the ribbed rollers 22 and 23 spirally rotates the entering branches to consequently form a cylindrical bale.

When the bale has been formed and has attained the required compression, the operator halts the tractor to enable that mass of branches at that moment lying between the front lower rotor 17 and the chamber compartment to enter this latter.

After this the operator operates the cylinder-piston unit 46, by which the block 54 withdraws from the blade 50 and the tube 49 descends to insert into the chamber that thread portion projecting from the tube.

Said thread portion then becomes entangled with the branches of the rotating bale, which unwinds the thread 45 from the reel 44, to wind it as a spiral about the bale by the combined effect of the rotary movement of the bale and the swinging movement of the thread guide tube 49.

After this, the operator halts the cylinder-piston unit 46, by which the tube 49 becomes horizontal, and at the same time the block 54 approaches the blade 50 to offer the thread 45 to it, which is then cut as already explained.

Finally, the operator extends the cylinder-piston units 41 to discharge the bound bale, then retracts them to close the operating chamber, after which he restarts the tractor to commence a new pruning residue gathering and compacting operation.

The invention is not limited to that illustrated and described, but includes all its technical equivalents and their combinations, if implemented within the context of the following claims.

## Claims

1. A baling machine for pruning residues, comprising a frame (1) mounted on wheels (3) and provided with a drawbar (4) for connection to a tractor, and on which there are provided a unit (12) for gathering pruning residues from the ground, a rearward compacting chamber, and a bale binding unit, characterised in that said gathering unit comprises at least one transverse lower pronged rotor (17, 18) rotated in the opposite direction to the machine advancement direction (A), and at least one transverse upper pronged rotor (19, 20) rotated in the opposite direction to the preceding and having its prongs offset from those of the lower rotor, between said two rotors there being defined the channel for feeding the pruning residues to the compacting chamber.

2. A machine as claimed in claim 1, characterised in that the gathering unit comprises a pair of lower pronged rotors (17, 18) and a pair of upper pronged rotors (19, 20).

3. A machine as claimed in claim 1, characterised in that said channel comprises two opposing side walls (15, 16) supporting said two pairs of rotors, a first flat panel positioned immediately below the axes of the upper pair of rotors, and a second flat panel positioned immediately above the axes of the lower pair of rotors, said panels being provided with slots for passage of the teeth or prongs of the respective rotors.

4. A machine as claimed in claim 1, characterised in that said gathering unit is hinged at its rear to the lower edge of the entry mouth of said compacting chamber.

5. A machine as claimed in claim 1, characterised in that with said lower pair of rotors there is associated a third pronged rotor (21) which rotates in the same direction thereas and is positioned on the same axis as that on which the gathering unit is hinged to the frame.

6. A machine as claimed in claim 1, characterised in that said compacting chamber is of cylindrical shape, with its horizontal axis positioned transverse to the machine longitudinal axis, and comprises a fixed front part and a movable rear part acting as a door for discharge of the bales.

7. A machine as claimed in claim 1, characterised in that said frame is shaped as a portal, with its interior bay providing said fixed chamber part and to its cross-member there being hinged said movable chamber part acting as the door.

8. A machine as claimed in claim 6, characterised in that said movable part acting as the door is opened and closed by a pair of opposite lateral hydraulic cylinder-piston units.

9. A machine as claimed in claim 6, characterised in that the operative compartment of said chamber is defined by a circumferential series of equidistant ribbed rollers rotating in the same direction, the series being interrupted at the connection to said residue guide and conveying channel.

10. A machine as claimed in claim 1, characterised in that the binding unit comprises a thread guide tube which swings in a vertical plane parallel to the forming chamber axis and receives the thread from an upstream reel to feed it to the forming chamber, and means, positioned in one of the tube end-of-swing positions, for cutting the thread downstream of the tube.

11. A machine as claimed in claim 10, characterised in that said cutting means comprise a circular blade positioned in proximity to said thread and associated with a block linked to the control system for said tube in such a manner that when the tube swings, the block is spaced from the blade, whereas when the tube is stationary the block urges the thread into contact with the blade cutting profile.
